Europäisches Patentamt

European Patent Office

Office européen des brevets

(19)

(11) Veröffentlichungsnummer: **0 071 155**
A2

(12)

# EUROPÄISCHE PATENTANMELDUNG

(21) Anmeldenummer: 82106532.3

(22) Anmeldetag: 20.07.82

(51) Int. Cl.³: **F 02 M 21/02**

(30) Priorität: 24.07.81 DE 3129191

(43) Veröffentlichungstag der Anmeldung:
09.02.83 Patentblatt 83/6

(84) Benannte Vertragsstaaten:
BE FR GB IT LU NL

(71) Anmelder: Karl Hopt GmbH

D-7464 Schömberg-2 Schörzingen(DE)

(72) Erfinder: Dolderer, Erich A.
Goethestrasse 14
D-7406 Mössingen 1(DE)

(74) Vertreter: Patentanwälte Kohler - Schwindling - Späth
Hohentwielstrasse 41
D-7000 Stuttgart 1(DE)

(54) Dosiereinrichtung für gasförmigen Treibstoff.

(57) Die Erfindung bezieht sich auf eine Dosiereinrichtung für gasförmigen Treibstoff für Verbrennungsmotoren. Die Erfindung besteht darin, daß die Einrichtung einen von dem Gas durchströmten Schlitzträger (40) und eine Vorrichtung (45, 47, 49 bzw. 45, 47, 68) zum Abdecken von mindestens einem Schlitz (42, 53) in Abhängigkeit von einem anderen strömenden Medium (38), z.B. der von einer Verbrennungsmotor angesaugten Luftmenge, enthält, wobei diese Vorrichtung eine auf die Schlitzränder gepreßte Folie (47) aufweist, die an ihrem einen, dem einen Ende der Schlitze (42, 53) benachbarten Ende starr an dem Schlitzträger (40) befestigt ist und an deren anderem, dem anderen Schlitzende benachbarten Abschnitt ein dem Anpreßdruck entgegenwirkendes Teil (49 bzw. 68) angreift, und wobei im Bereich der Schlitze (42, 53) ein in gleicher Richtung wie der Anpreßdruck wirkendes Teil (45) die Folie (47) in Anlage an die Schlitzränder hält, das in Abhängigkeit von dem Durchsatz des anderen strömenden Mediums (28) längs der Schlitze (42, 53) verschiebbar ist.

./...

EP 0 071 155 A2

*Fig.1*

Anmelderin:
Karl Hopt GmbH
7464 Schömberg-2 Schörzingen

Stuttgart, 05.07.1982
P 4220 EP K/Ba

Vertreter:
Kohler-Schwindling-Späth
Patentanwälte
Hohentwielstraße 41
7000 Stuttgart 1

## Dosiereinrichtung für gasförmigen Treibstoff

Die Erfindung bezieht sich auf eine Dosiereinrichtung für
gasförmigen Treibstoff, im folgenden Treibgas genannt, für
Verbrennungsmotoren.

Dosiervorrichtungen für Treibgase sind besonderen Bedingungen ausgesetzt, die sich von denjenigen Bedingungen, denen
Dosiervorrichtung für flüssige Treibstoffe ausgesetzt sind,
zum Teil stark unterscheiden. Beispielsweise liegt die
Temperatur eines zuvor in flüssigem Zustand befindlichen
Treibgases in der Dosiervorrichtung bei ca. 5° C. Bei Störungen der Vorwärmung können jedoch auch niedrigere Temperaturen, z.B. bis zu -40° C auftreten. Trotzdem sollte die
Dosiervorrichtung wenigstens noch einigermaßen funktionsfähig sein. Schließlich führt aus dem flüssigen Aggregatszustand erwärmtes Gas keinerlei flüssige Bestandteile mit
sich, wogegen flüssiger Treibstoff auch im Vergaser stets
noch so viele flüssige Bestandteile mit sich führt, daß ein
Schmiereffekt eintritt, der das Festfressen von gegeneinander beweglichen Teilen verhindert. So gibt Spausta in seinem
Buch "Treibstoffe für Verbrennungsmotoren" Band II: "Die
gasförmigen Brennstoffe" an, daß Schieber, welche z.B. vom
Gaspedal her angesteuert werden, für die Dosierung von
gasförmigen Treibstoffen nicht geeignet seien. Schieber
müßten stets geschmiert werden, beim Gas-Betrieb würde
jedoch der Schmierstoff durch das Gas entfernt, so daß
sofort Trockenlauf eintreten würde. Dies würde zu erhöhter
Reibung und zum Verschleiß führen.

Bekannte Dosiereinrichtungen für gasförmige Treibstoffe
werden durch den Unterdruck im Vergaser gesteuert. Das Gas
wird dabei über den Vergaser zugeführt. Derartige Anordnungen erfordern jedoch Umbauten am Vergaser, die in manchen
Ländern nicht zulässig sind. Außerdem haben die bekannten
Dosiereinrichtungen für gasförmige Treibstoffe den Nachteil,
daß ein hierfür umgebauter Vergaser für Flüssigbrennstoffe
nicht mehr einwandfrei arbeitet. In der Praxis wird jedoch
gefordert, daß die Umstellung von Flüssigkraftstoff auf
gasförmigen Kraftstoff schnell und auf möglichst einfache
Weise möglich sein soll.

Außerdem haben die bekannten Dosiereinrichtungen für gasför-

3    **0071155**

mige Treibstoffe den Nachteil, daß es kaum möglich ist, über den gesamten Leistungsbereich des Motors ein konstantes Verhältnis Gas zu Luft einzuhalten. Dies wirkt sich dahingehend aus, daß der Gasverbrauch zu hoch ist, die Beschleunigung schlechter als bei einem mit Flüssigkraftstoff betriebenen Motor ist und daß im oberen Drehzahlbereich die Leistung abfällt. Bei richtiger Gasdosierung braucht jedoch ein mit gasförmigem Treibstoff betriebener Verbrennungsmotor gegenüber einem mit Flüssigkraftstoff betriebenen Verbrennungsmotor keinen Leistungsfall aufzuweisen, sofern das Gas mit geeigneten Mitteln zu der Verbrennungsluft dosiert wird.

Zur Dosierung von flüssigem Treibstoff ist es bereits bekannt, in einem zylindermantelförmigen Rohrabschnitt Längsschlitze vorzusehen, die mit Hilfe eines kolbenförmigen Schiebers je nach Bedarf teilweise oder auch ganz freigegeben werden. Diese von der Firma Bosch hergestellte Dosiereinrichtung kann aber wegen der Verwendung eines Schiebers und der damit verbundenen Nachteile und Risiken nicht für die Dosierung von Treibgas verwendet werden.

Der Erfindung liegt die Aufgabe zugrunde, eine Dosiereinrichtung zu schaffen, die speziell für den Antrieb des Verbrennungsmotors mittels Flüssiggas, beispielsweise einem Gemisch aus Propan und Butan, geeignet ist, die aber ohne einen Schieber auskommt.

Diese Aufgabe wird gemäß der Erfindung dadurch gelöst, daß die Dosiereinrichtung einen von dem Treibgas durchströmten Schlitzträger und eine Vorrichtung zum ggf. teilweisen Abdecken der Schlitze in Abhängigkeit von einem anderen strömenden Medium, z.B. der von einem Verbrennungsmotor angesaugten Luftmenge, enthält, wobei diese Vorrichtung eine auf die Schlitzränder gepreßte Folie aufweist, die an ihrem einen, dem einen Ende der Schlitze benachbarten Ende starr an dem Schlitzträger befestigt ist und an der an ihrem anderen, dem anderen Schlitzende benachbarten Abschnitt ein dem Anpreßdruck entgegenwirkendes Teil angreift, und wobei im Bereich der Schlitze ein in gleicher Richtung wie der Anpreßdruck wirkendes Teil die Folie in Anlage an die Schlitzränder hält, das in Abhängigkeit von dem Durchsatz des anderen strömenden Mediums längs der Schlitze verschiebbar ist.

Die Erfindung hat den Vorteil, daß es ohne weiteres möglich ist, ein konstantes Verhältnis Gas zu Luft über den gesamten Leistungsbereich des Motors einzuhalten und daß die Zusammensetzung des Gas-Luft-Gemisches über den gesamten Leistungs- und Drehzahlbereich, einschließlich der Beschleunigung genau der Motorkennlinie angepaßt werden kann. Ein besonderer Vorteil der Erfindung liegt darin, daß diese Dosiereinrichtung ohne jede Schmierung arbeitet und daß deren mechanische Reibung auf ein Minimum reduziert ist, so daß die erforderlichen Antriebskräfte für diese Dosiereinrichtung ebenfalls sehr gering, nämlich unter 2 bar sind. Dadurch ist es auch möglich, die Dosiereinrichtung ohne Verwendung eines Hebelsystems direkt durch eine Meßscheibe zu betätigen, die in dem anderen strömenden Medium, beispielsweise in dem von dem Verbrennungsmotor angesaugten Luftstrom, angeordnet ist.

Derartige in Abhänigkeit von der Menge pro Zeiteinheit eines
strömenden Mediums arbeitende Antriebsvorrichtungen für
Dosiereinrichtungen sind bekannt. Dabei wird die Luft- oder
Gasmenge durch ein Rohr geleitet, das leicht konisch ist und
einen Schwebekörper enthält, der je nach der Menge des
durchfließenden Mediums mehr oder weniger gegen die Schwerkraft oder eine Federkraft angehoben wird. Auch ist bekannt,
anstelle eines Schwebekörpers eine Meßscheibe zu verwenden,
welche sich in einer Meßdüse frei bewegen kann und deren
Lage ebenfalls der Menge des durchströmenden Mediums entspricht. Bei einer durch die DE-OS 19 60 146 bekanntgewordenen Dosiereinrichtung für Flüssigkraftstoff ist die Meßscheibe am langen Arm eines leicht drehbar gelagerten Hebels
befestigt. Der kurze Hebel betätigt dann die Dosiereinrichtung. Mit der erfindungsgemäßen Dosiereinrichtung können
jedoch so geringe Reibungswerte erzielt werden, daß auf die
bekannte Hebelübersetzung verzichtet werden kann und die
Meßscheibe direkt mit dem verschiebbaren Teil der Dosiereinrichtung gekoppelt werden kann.

Ein weiterer Vorteil der Erfindung liegt darin, daß das
Gewicht der erfindungsgemäßen Einrichtung außerordentlich
gering ist und daß sie eine sehr schnelle Umstellung von
flüssigem Kraftstoff auf gasförmigen Kraftstoff erlaubt.

Die die Folie an die Schlitzränder anpreßende Kraft kann bei
Ausführungsformen der Erfindung auf verschiedene Weise
erzeugt werden. Beispielsweise kann diese Kraft durch den
Differenzdruck zwischen der Eingangs- und der Ausgangsseite
der Schitze aufgebracht werden oder aber das längs der Schlitze verschiebbare Teil bringt die Kraft auf, mit der die Folie auf die Schlitzränder gepreßt ist, wobei dann die Folie zweckmäßig durch eine Feder straff gespannt ist. Bei einer bevorzugten Ausführungsform der Erfindung wird diese Anpreßkraft jedoch durch Magnete erzeugt. Die die Schlitze in Abhängigkeit von dem Durchsatz der vom Motor angesaugten Luft abdeckende Folie besteht in diesem Falle aus einem magnetisierbaren Werkstoff unter Umständen auch aus einem magnetisierbaren Kunststoff. Hierzu können auf dem Schlitzträger beliebig angeordnete Magnete vorgesehen sein. Bei einer Ausführungsform der Erfindung sind jedoch die Schlitze durch in einem kleinen Abstand voneinander befestigte Permanentmagnetstäbe gebildet, die quer zur Schlitzrichtung magnetisiert sind, so daß einem Nordpol an dem einen Schlitzrand ein Südpol des anderen Magnetstabes an dem gegenüberliegenden Schlitzrand gegenübersteht.

Die vorerwähnten, den Anpreßdurck der Folie auf die Schlitzwände erzeugenden Mittel können auch kumulativ bei einer Ausführungsform der Erfindung verwirklicht sein.

Das dem Anpreßdruck entgegenwirkende Teil kann bei einer Ausführungsform der Erfindung mit dem in gleicher Richtung wie der Anpreßdruck wirkenden Teil starr verbunden sein, wobei dann die Folie mit ihrer den Schlitzen zugewandten Seite über dieses Teil geführt ist, so daß auf diesem Folienabschnitt zwischen dem in Richtung des Anpreßdruckes wirkenden Teil und dem entgegen dem Anpreßdruck wirkenden Teil die Folie von den Schlitzrändern abgehoben ist, den entsprechenden Abschnitt der Schlitze für den Durchtritt des Gases freigibt und nur noch auf dem Abschnitt zwischen ihrem
am Schlitzträger befestigten Ende und dem in Richtung des
Anpreßdruckes wirkenden Teil auf den Schlitzrändern anliegt.

Das die Folie von den Schlitzrändern wegziehende Teil kann
auch durch eine an dem freien Ende der Folie angreifende
Feder gebildet sein, die schräg zu der Oberfläche des
Schlitzträgers angeordnet ist, so daß die Federkraft eine
senkrecht zu der Oberfläche des Schlitzträgers verlaufende
Komponente aufweist. Auch in diesem Falle ist der Folienabschnitt zwischen seinem freien Ende und dem in Richtung des
Anpreßdrucks wirkenden Teil von den Schlitzen abgehoben,
wogegen der Folienabschnitt zwischen dem an dem Schlitzträger befestigten Folienende und dem in Richtung des Anpreßdruckes wirkenden Teil auf den Schlitzrändern aufliegt und
die Schlitze auf der diesem Abschnitt entsprechenden Länge
abdeckt.

Bei einer Ausführungsform der Erfindung ist die Dosiereinrichtung zentrisch in einem Gehäuse angeordnet, durch das
die vom Motor angesaugte Verbrennungsluft hindurchströmt,
und zwar vorzugsweise vor der vom Gaspedal angesteuerten, an
sich bekannten Drosselklappe. Dieses Gehäuse einschließlich
der Dosiereinrichtung kann unmittelbar an den Ausgang des
Luftfilters angeschlossen sein.

Die Dosiereinrichtung wird von einer Meßeinrichtung gesteuert, die in den angesaugten Luftstrom eingeschaltet ist
und zweckmäßig mit Hilfe einer Meßscheibe in einem Meßkonus die Menge der durchströmenden Luft pro Zeiteinheit angibt.
Dabei kann die Bewegung der Meßscheibe unmittelbar auf die
Verschiebebewegung des in Richtung des Anpreßdruckes wirkenden Teiles, beispielsweise einer Walze, übertragen sein.

Schließlich können Ausführungsformen der Erfindung eine
Sensoreinrichtung aufweisen, die ein die Lage der Meßscheibe
und damit die Größe der durchströmenden Luftmenge pro Zeiteinheit entsprechendes elektrisches Signal erzeugt, so daß
diese Meßgröße angezeigt werden kann oder durch dieses
elektrische Signal andere Einrichtungen des Kraftfahrzeuges
in Abhängigkeit von dem Durchsatz der Verbrennungsluft
gesteuert werden.

Die erfindungsgemäße Dosiereinrichtung eignet sich nicht nur
für Verbrennungsmotoren, insbesondere Kraftfahrzeuge, die
wechselweise mit flüssigem Kraftstoff oder gasförmigen
Kraftstoff angetrieben werden sollen, sondern auch für
andere Einrichtungen, in denen gasförmiger Kraftstoff in
Abhängigkeit von einem anderen strömenden Medium dosiert
werden muß. Die Anwendung der Erfindung ist auch nicht auf
solche Teibgase beschränkt, die in flüssigem, unterkühltem
Zustand bevorratet und transportiert werden, sondern auch
zur Dosierung von gasförmigen Kraftstoffen bei stationären
Anlagen, die beispielsweise durch Erdgas betrieben werden.

In der Zeichnung sind zwei Ausführungsformen der erfindungsgemäßen Dosiereinrichtung dargestellt. Es zeigen:

Fig. 1   einen Querschnitt durch eine erfindungsgemäße
         Dorsiervorrichtung zwischen Luftfilter 1 und Drosselklappe eines Verbrennungsmotors, wobei der obere
         Teil der Einrichtung abgebrochen und in kleinerem
         Maßstab gezeichnet ist und einige Einzelheiten nur
         schematisch dargestellt sind,

Fig. 2   eine Draufsicht auf den Schlitzträger, ebenfalls in
         größerem Maßstab.

Fig. 3   eine andere Ausführungsform des erfindungsgemäßen
         Rollschiebers im Querschnitt und

Fig. 4   eine Draufsicht auf die Ausführungsform nach Fig. 3

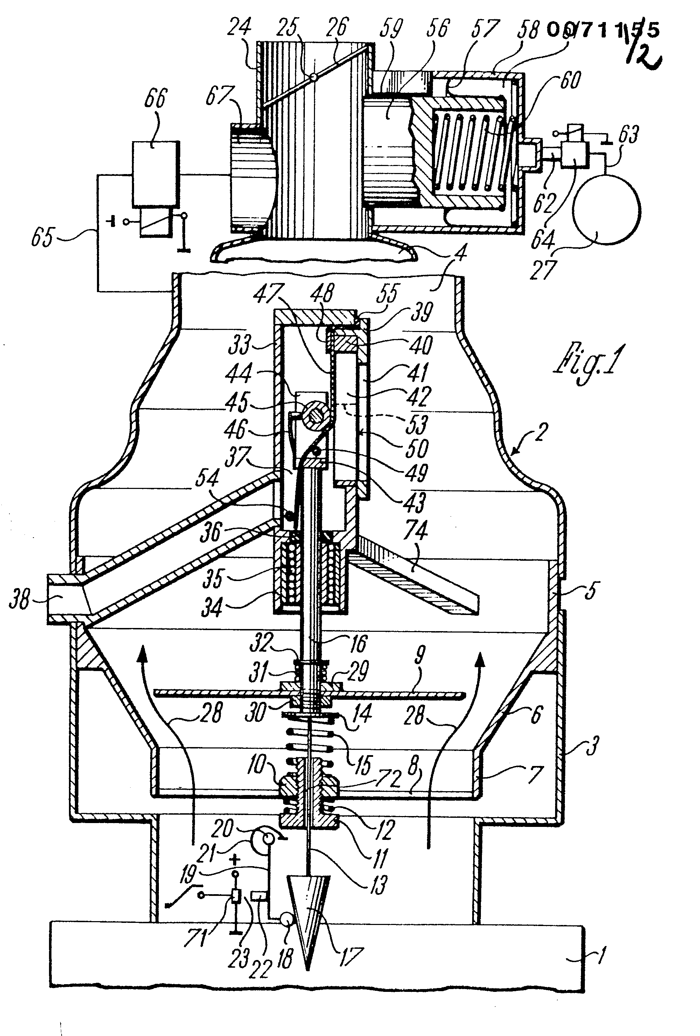

Bei der dargestellten Ausführungsform ist die erfindungsgemäße Dosiereinrichtung vor einen Gleichdruck-Vergaser eingebaut. An den Auslaßstutzen eines Luftfilters 1 ist ein
zweiteiliges Gehäuse 2 angeschlossen, dessen Teile 3 und 4
über einen ringförmigen Einsatz 5 miteinander verbunden
sind. An den zylindrischen Teil des Einsatzes 5 schließt
sich in Fig. 1 nach unten ein konischer Teil und an dessen
unteres Ende wiederum ein kreiszylinderförmiger Teil 7 an,
an dessen unterem Ende eine sich quer über die untere Öffnung des Teiles 7 erstreckende Traverse 8 befestigt ist. Der
Konus 6 mit dem Teil 7 bildet eine Meßdüse, in der eine
Meßscheibe 9 aufgehängt ist. Hierzu ist auf der Traverse 8
eine Mutter 10 befestigt, in die eine Anschlagschraube 11
gegen die Wirkung einer Druckschraubenfeder 12 eingeschraubt
ist. Die Schraube 11 weist eine Längsbohrung 72 auf, in der
ein Meßdorn 13 geführt ist, der an seinem in Fig. 1 oberen
Ende eine Scheibe 14 trägt, die durch eine Druckschraubenfeder 15 nach oben gegen das untere Ende einer Meßstange 16 gedrückt wird. Das andere Ende der Feder 15 stützt sich über die Mutter 10 auf der gerätefesten Traverse 8 ab. Die Feder 15 ist lediglich so stark, daß sie bei der in Fig. 1 dargestellten senkrechten Lage das Gewicht der sich an der Platte 14 abstützenden Teile teilweise ausgleicht.

Am unteren Ende des Meßdorns 13 ist ein Meßkegel 17 befestigt, an dessen Mantel eine Rolle 18 anliegt, die an dem einen Ende eines Armes 19 befestigt ist, dessen anderes Ende um eine Achse 20 schwenkbar gelagert ist, wobei eine Spiralfeder 21 den Arm 19 und damit die Rolle 18 in Anlage an den Meßkegel 17 hält. In der Zeichnung sind die Teile 18, 19 und 20 der besseren Übersicht halber nur schematisch dargestellt.

Auf dem Arm 19 ist, schematisch angedeutet, ein Dauermagnet 22 befestigt, gegenüber dem ein magnetisch steuerbarer Sensor 71 ortsfest befestigt ist, der beispielsweise als Hallsonde ausgebildet sein kann. Eine Bewegung der Meßsonde 13 in Achsrichtung wird durch den Meßkegel und die Schwenkbewegung des Armes 19 in eine Änderung der Größe eines Luftspaltes 23 zwischen dem Magneten 22 und dem Sensor 71 umgewandelt. Am Ausgang des Sensors 71 entsteht ein der Größe des Luftspaltes entsprechendes elektrisches Signal. Diese Anordnung wandelt daher die Längsbewegung des Meßdorns 13 in ein analoges elektrisches Signal um.

Am oberen Ende des Gehäuseteiles 4 ist ein Gehäuse 24 angeschlossen, um dessen Drosselklappenwelle 25 die Drosselklappe 26 eines handelsüblichen Gleichdruckvergasers gelagert ist. Das obere Ende des Gehäuse 24 ist mit dem Saugrohr
27 des Motors verbunden, das in Fig. 1 nur schematisch
dargestellt ist. Der Motor saugt daher die Ansaugluft entlang der Pfeile 28 durch den Ringspalt zwischen der Meßscheibe 9 und der Innenwand des Meßkonus 6 hindurch in das
Gehäuse 2 und von dort über den Stutzen 24 an. Bedingt durch
die durch diesen Luftspalt hindurchströmende, der Motorlast
entsprechenden Luftmenge wird die Meßscheibe 9 mehr oder
weniger angehoben, wobei der Hub der Meßscheibe unmittelbar
ein Maß für die in Richtung 28 strömende Luftmenge ist.

Die Meßscheibe 9 weist in ihrer Achse eine Muffe 29 auf, mit
der sie zum Zwecke der Justierung auf der Meßstange 26
verschiebbar geführt ist. Die Justierung erfolgt mittels
einer Mutter 30, die auf ein Gewinde am unteren Ende der
Meßstange 16 gegen die Wirkung einer Druckschraubenfeder 31
aufschraubbar ist, deren eines Ende sich an einem Sprengring
32 und deren anderes Ende sich auf der Muffe 29 abstützen.

Zentrisch im Oberteil 4 des Gehäuses 2 ist ein Gehäuses 33
mit Hilfe von Streben 74 an dem Gehäuseeinsatz 5 befestigt.
Im Unterteil 34 des Gehäuses 33 ist eine Kugelbuchse 35
eingepreßt, in der die Meßstange 16 längsverschiebbar gelagert ist. Am oberen Ende der Kugelführungsbuchse 35 schließt
sich eine Dichtung 36 an, die den Innenraum 37 des Gehäuses
33 nach unten abdichtet. Der Innenraum 33 ist über ein
Gaszuführungsrohr 38 mit einer nicht gezeichneten Vorwärmestation verbunden, in der das Flüssiggasgemisch, das beispielsweise aus Propan und Butan bestehen kann und vorher entspannt wird, auf 5 Grad Celsius erwärmt wird. Der Innenraum 37 des Gehäuses 33 ist durch einen in einem Deckel 39
gehaltenen Schlitzträger 40 von dem Innenraum des Gehäuses 2
getrennt. In dem Deckel 39 sind eine oder mehrere Aussparungen 41 vorgesehen, in deren Bereich der Schlitzträger 40
ein oder mehrer Schlitze 42 aufweist, durch die das in den
Innenraum 37 zugeführte Treibgas durch eine einen Rollschieber enthaltende Dosiereinrichtung gesteuert in den
Innenraum des Gehäuses 2 strömt.

Die Dosiereinrichtung weist einen auf dem oberen Ende der
Meßstange 16 befestigten gabelförmigen Lagerbock 43 auf,
zwischen dessen beiden Schenkeln 44 eine zylindrische Walze
45 auf Rollenlagern drehbar gelagert ist. Die Lagerung der
Walze 45 ist quer zur Längsachse des Meßstabes 16 um einen
kleinen Betrag verschiebbar. Das freie Ende einer Blattfeder
46 drückt auf die Lager der Rolle 45. Eine Folie 47 ist an
ihrem in Fig. 1 oberen Ende mittels einer Klemmleiste 48 an
dem bei der dargestellten Ausführungsform zugleich als
Schlitzträger 40 ausgebildeten Deckel 39 befestigt. Sie
erstreckt sich über die Schlitze 42 des Schlitzträgers 40
hinweg durch den Spalt zwischen der Rolle 45 und dem
Schlitzträger 40 hindurch und über einen im Abstand von der
Oberfläche des Schlitzträgers 40 in dem Lagerbock 43 befestigen Rollstift 49, so daß die Folie nach dem Durchtritt
durch den Spalt zwischen der Walze 45 und dem Schlitzträger
40 von dessen Oberfläche hinweggeführt ist. Das untere Ende
der Folie 47 wird bei der dargestellten Ausführungsform
durch einen Stab 54 festgehalten.

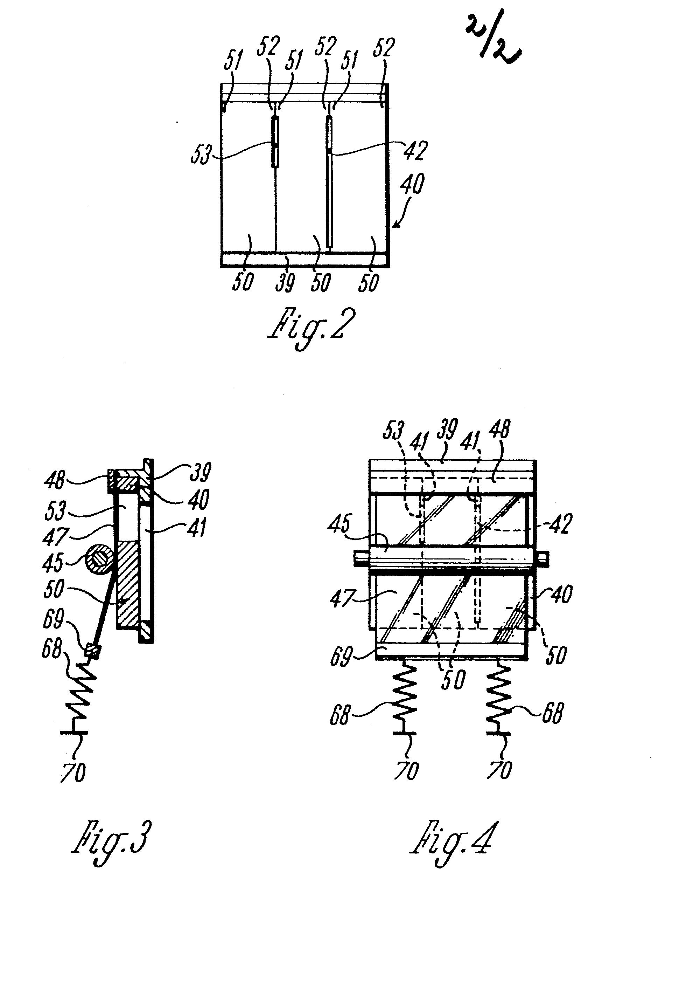

Der Schlitzträger 40 weist als Dauermagnet ausgebildete
Stäbe 50 auf, deren Pole, wie Fig. 2 zeigt, an ihren Längskanten liegen. Sie sind in dem Schlitzträger 40 so angeordnet, daß einem Südpol 51 ein Nordpol 52 des benachbarten
Stabes gegenübersteht. Die Stäbe 50 sind unmittelbar in dem
Deckel 39 beispielsweise durch Klebung befestigt. Bei der
Montage werden zwischen die Magnetstäbe 50 antihaftbeschichtete Stahlfolien eingesteckt, deren Dicke die Breite
der Schlitze 42 bestimmt, die wiederum von der zu steuernden
Gasmenge abhängt. Nach dem Aushärten des Klebstoffes werden
die Stahlfolien entfernt, so daß zwischen den Polflächen der
Stäbe 50 ein Spalt definierter Länge und definierter Breite
stehen bleibt. Die Folie 47 besteht aus magnetisierbarem
Werkstoff, beispielsweise einem geeigneten Stahl oder magnetisierbaren Kunststoff. Sie wird durch die Magnete fest
auf die Schlitzränder gepreßt. Durch das Anheben der Meßstange 16 wird durch den Rollstift 49 die Folie von den
Schlitzrändern in einer genau definierten Länge, die durch
den Abstand zwischen dem Stift 49 und der Walze 45 bestimmt
ist, abgezogen und bei Abwärtsbewegung führt die Walze 45
die Folie wiederum in definierter Weise in Anlage an die
Schlitzränder. Dadurch wird die durch die Schlitze strömende
Gasmenge in Abhängigkeit von der Stellung der Meßscheibe 9
in dem Meßkegel 6 und damit in Abhängikeit von der durch den
Meßkegel hindurchströmenden Luftmenge gesteuert.

Bei Ausführungsformen der Erfindung können zwei Magnetstäbe
50 einen einzigen Schlitz 42 bilden. Bei anderen Ausführungsformen sind drei Stäbe 50 vorhanden, die dann zwei
Schlitze 42 zwischen sich bilden. Einer der beiden Schlitze, beispielsweise ein Schlitz 53 kann kürzer sein als der
Schlitz 42, so daß dieser erst dann freigegeben wird, wenn
eine höhere Motorleistung benötigt wird und das Gas-Luftgemisch einen höheren Gasanteil erhalten soll. Die beiden
Schlitze 42 und 53 bilden zusammen ein Register, dessen
Durchlaßquerschnitt beim Öffnen des Schlitzes 53 zusätzlich
vergrößert wird. Der Abschnitt des Zwischenraumes zwischen
den den Schitz 53 begrenzenden Stäben 50, uum den dieser
Schlitz kürzer als der Schlitz 42 ist, ist durch Stahlfolien
geschlossen.

Die Breite der Schlitze 42, 53 kann in Längsrichtung der
Schlitze sich vergrößern oder verkleinern, so daß der Gasanteil des Gemisches der Motorlast optimal angepaßt werden
kann, beispielsweise mit höherer Motordrehzahl der Gesamtquerschnitt der Schlitze unproportional geändert wird.
Anstelle einer V-förmigen lichten Weite der Schlitze können
die Schlitze auch stufenförmige Ränder aufweisen.

Die genaue Länge des freigegebenen Abschnittes der Schlitze
wird durch die Anpreßlinie der Walze 45 an die Oberfläche
der Stäbe 50 bestimmt. Da die Folie durch den Rollstift 49
zwangsweise abgehoben wird und zwischen diesem und der Walze
45 ein unveränderlicher Abstand besteht, hat der Druck des
durch das Rohr 38 zugeführten Gases keinen in der Praxis
wesentlichen Einfluß auf die Abhebebewegung der Folie 47 von
den Rändern der Schlitze 42 und 53.

Das durch die Schlitze 42 und 53 hindurchtretende Gas tritt
durch die Aussparung 41 in den Innenraum des Gehäuses 2 ein.

Der Deckel 39 ist unter Zwischenschaltung einer Dichtung 55
an dem Gehäuse 33 befestigt.

Da der Innenraum des Gehäuses 33 an der Durchtrittstelle des
Meßstabes 16 durch eine Dichtung 36 ebenfalls abgedichtet
ist, wirkt der in dem Gehäuse 33 sich ausbildende Gasdruck
auf die Querschnittsfläche der Meßstange 16 und drückt diese
nach unten. Sofern keine Luft in Richtung der Pfeile 18
strömt, befindet sich die Meßscheibe 9 in ihrer untersten
Stellung. Sobald eine Strömung in Richtung der Pfeile 18
einsetzt, wird entsprechend der durchströmenden Luftmenge
die Meßscheibe 9 angehoben. Bei einer entsprehenden Ausbildung der konischen Form der Meßdüse 6 kann eine bestimmte
Kurvenform der Abhängigkeit des Hubes der Meßstange 16 von
der durchfließenden Luftmenge vorgegeben werden. Bei einer
Ausführungsform der Erfindung konnte erreicht werden, daß
bei einer bestimmten Dimensionierung der Feder 15 und bei
einem Gasdruck von 0,5 bar im Gehäuse 33 bei einer Druckschwankung des Gases um ± 0,1 bar sich der durch die Folie
47 gesteuerte Durchsatz des Gases durch die Schlitze 42, 53
nur um ± 3 % ändert, wobei sich die Position der Meßscheibe
90 ebenfalls nur um diesen Prozentsatz ändert. Daher wirken
sich Druckschwankungen des Gases vor der Dosiereinrichtung
nur unwesentlich auf die in das Gehäuse 2 eintretende Gasmenge aus.

An das Gehäuse 24 ist ein üblicher Gleichdruckvergaser für
Flüssigkraftstoffe angeschlossen. Ein Schieberkolben 56
betätigt eine nicht gezeichnete Düsennadel eines bekannten
Vergasers zur Dosierung der Flüssigkraftstoffmenge und er

wird bei Verwendung von Flüssigkraftstoff über eine Steuerbohrung im Vergasergehäuse gesteuert. Der Druck, den das
Kraftstoffgemisch beim Eintritt in den Vergaser aufweist,
herrscht daher auch vor der Drosselklappe 26.

Der Schieber 56 ist über eine Rollmembran 57 gegenüber dem
an dem Drosselklappengehäuse 24 angeschlossenen Gehäuse 58
abgedichtet, er ist durch eine Führung 59 geführt und eine
Druckfeder 60 sorgt dafür, daß der Kolben 56 im Leerlauf den
Querschnitt des Gehäuses 24 vor der Drosselklappe 26 fast
vollständig schließt.

Entsteht in dem Raum 61 hinter dem Kolben 56 ein Unterdruck,
so wird der Kolben 56 entgegen der Wirkung der Feder 60 in
die in Fig. 1 dargestellte Stellung verschoben. Dieser
Unterdruck im Raum 61 wird durch eine nur schematisch gezeichnete Rohrverbindung 62, 63 mit dem Ansaugrohr 27 des
Motors hergestellt, in die ein 2/2 Wegeventil 64 eingeschaltet ist. Bei Betrieb des Motors mit Flüssiggas ist das
Magnetventil 64 auf Durchgang geschaltet, so daß während des
gesamten Drehzahl- und Lastbereiches der volle Unterdruck
des Saugrohres 27 an dem Schieber 56 anliegt und daher der
Schieber in seiner zurückgezogenen, in Fig. 1 dargestellten
Stellung steht, so daß der lichte Querschnitt des Gehäuses
24 vor der Drosselklappe 26 praktisch vollständig für das
Gas-Luftgemisch aus dem Gehäuse 2 zur Verfügung steht.

Um eine weitere Vergrößerung des Durchlaßquerschnittes vor
der Drosselklappe 26 zu erreichen, kann bei Ausführungsformen der Erfindung an das Gehäuse 2 eine in Fig. 1 nur durch einen Strich angedeutete zusätzliche Rohrleitung 65 angeschlossen sein, die über ein 2/2 Ventil 66 in einen Rohrstutzen 67 mündet, der an das Gehäuse 24 unmittelbar vor der
Drosselklappe 26 angeschlossen ist.

In den Fig. 3 und 4 ist eine Ausführungsform der Erfindung
dargestellt, bei der die Folie 47 nicht durch einen Rollstift 49 von den Rändern der Schlitze 42 und 53 abgezogen
wird, sondern durch zwei parallel wirkende Federn 68, die an
einer am unteren Ende der Folie 47 befestigten Leiste 69
angreifen. Das rückwärtige Ende der Federn 68 ist an Punkten
70 im Gehäuse 33 befestigt, die sich in einem Abstand von
der Ebene befinden, die durch die der Folie zugewandte
Oberfläche des Schlitzträgers 40 gebildet wird. Die Kraft
der Federn 68 bewirkt daher einen zu der Oberfläche des
Schlitzträgers 40 schrägen Verlauf der Folie 47 auf dem
zwischen der Walze 45 und dem unteren Ende der Folie 47
verlaufenden Folienabschnitt. Im Bereich dieses Abschnittes
ist dann der Schlitz 42 für den Durchtritt des Gases freigegeben.

Der Druck, mit dem die Folie 47 an die Ränder der Schlitze
42, 53 aufgedrückt wird, kann bei anderen Ausführungsformen
der Erfindung auch lediglich durch den Differenzdruck
zwischen dem Gasdruck im Inneren des Gehäuses 33 und dem
Druck im Gehäuse 2 gebildet sein, so daß ein Anpreßen der
Folie 47 durch magnetische Wirkung nicht mehr erforderlich
ist. Auch bei der Ausführungsform nach den Fig. 3 und 4 kann
auf ein Anpressen der Folie 47 auf die Schlitzränder verzichtet werden, wenn die Federn 68 die Folie 47 hinreichend stramm halten und die Walze 45 die Folie 47 dicht an die Schlitzränder anlegt. Diese Ausführungsform arbeitet unabhängig davon, wie groß ein Differenzdruck zwischen dem Gas im Gehäuse 33 und dem Gemisch im Gehäuse 2 ist.

Wird auf das Anpressen der Folie 47 auf die Schlitzränder durch Magnetkräfte verzichtet, so kann selbstverständlich die Folie 47 auf aus einem nichtmagnetisierbaren Werkstoff bestehen.

0071155

Patentansprüche

1. Dosiereinrichtung für gasförmigen Treibstoff für Verbrennungsmotoren, dadurch gekennzeichnet, daß die Einrichtung einen von dem Gas durchströmten Schlitzträger (40) und eine Vorrichtung (45, 47, 49 bzw. 45, 47, 68) zum Abdecken von mindestens einem Schlitz (42, 53) in Abhängigkeit von einem anderen strömenden Medium (38), z.B. der von einer Verbrennungsmotor angesaugten Luftmenge, enthält, wobei diese Vorrichtung eine auf die Schlitzränder gepreßte Folie (47) aufweist, die an ihrem einen, dem einen Ende der Schlitze (42, 53) benachbarten Ende starr an dem Schlitzträger (40) befestigt ist und an deren anderem, dem anderen Schlitzende benachbarten Abschnitt ein dem Anpreßdruck entgegenwirkendes Teil (49 bzw. 68) angreift, und wobei im Bereich der Schlitze (42, 53) ein in gleicher Richtung wie der Anpreßdruck wirkendes Teil (45) die Folie (47) in Anlage an die Schlitzränder hält, das in Abhängigkeit von dem Durchsatz des anderen strömenden Mediums (28) längs der Schlitze (42, 53) verschiebbar ist.

2. Einrichtung nach Anspruch 1, dadurch gekennzeichnet, daß an dem freien Ende der Folie mindestens eine Feder (68) angreift, deren auf die Folie ausgeübte Kraft eine den Folienabschnitt zwischen diesem Ende und dem in Richtung des Anpreßdruckes wirkenden Teil von den Schlitzrändern abhebende Kraftkomponente aufweist.

3.  Einrichtung nach Anspruch 1, dadurch gekennzeichnet, daß das dem Anpreßdruck entgegenwirkende Teil (49) mit dem in Richtung des Anpreßdruckes wirkenden Teil (45) starr verbunden ist und daß die Folie mit ihrer den Schlitzen (42, 53) zugewandten Seite auf dem dem Anspreßdruck entgegenwirkenden Teil (49) aufliegt.

4.  Einrichtung nach einem der Ansprüche 1 bis 3, dadurch gekennzeichnet, daß die Folie durch den Differenzdruck zwischen der Eingangs- und der Ausgangsseite der Schlitze (42, 53) auf die Schlitzränder gedrückt ist.

5.  Einrichtung nach einem der Ansprüche 1 bis 3, dadurch gekennzeichnet, daß das längs der Schlitze (42, 53) verschiebbare Teil (45) mit der Anpreßkraft auf die Folie gepreßt ist, und daß die Folie durch eine Feder (68) straff gespannt ist.

6.  Einrichtung nach einem der Ansprüche 1 bis 3 oder 5, dadurch gekennzeichnet, daß das längs der Schlitze (42, 53) verschiebbare Teil (45) aus einer drehbar gelagerten Walze besteht.

7.  Einrichtung nach einem der vorhergehenden Ansprüche außer Anspruch 2, dadurch gekennzeichnet, daß das dem Anpreßdruck entgegenwirkende Teil (49) eine drehbar gelagerte Walze aufweist.

8. Einrichtung nach einem der vorhergehenden Ansprüche, dadurch gekennzeichnet, daß die Folie (47) aus einem magnetisierbaren Werkstoff besteht und daß der Schlitzträger (40) die Folie (47) anziehende Magnete (50) aufweist.

9. Einrichtung nach Anspruch 8, dadurch gekennzeichnet, daß der Schlitzträger (40) die Schlitze (42, 53) begrenzende Magnetpole (51, 52) aufweist.

10. Einrichtung nach Anspruch 8 oder 9, dadurch gekennzeichnet, daß die Magnete als Permanentmagnete ausgebildet sind.

11. Einrichtung nach einem der Ansprüche 8 bis 10, dadurch gekennzeichnet, daß die Schlitze (42, 53) durch die Zwischenräume zwischen quermagnetisierten Permanetmagnetstäben (50) gebildet sind.

12. Einrichtung nach einem der vorhergehenden Ansprüche dadurch gekennzeichnet, daß in dem Schlitzträger (40) mehrere unterschiedlich lange Schlitze (42, 53) angeordnet sind.

13. Einrichtung nach einem der vorhergehenden Ansprüche, dadurch gekennzeichnet, daß die Schlitze (42, 53) über ihre Länge unterschiedlich breit sind.

14. Einrichtung nach einem der vorhergehenden Ansprüche, dadurch gekennzeichnet, daß das in Richtung des Anpreßdruckes wirkende Teil (45) durch ein Feder (46)
gegen die Folie (47) und die Oberfläche des Schlitzträgers (40) gedrückt ist.

15.  Einrichtung nach einem der vorhergehenden Ansprüche,
     dadurch gekennzeichnet, daß das in Richtung des des
     Anpreßdruckes wirkende Teil (45) in einem längs der
     Schlitze (42, 53) verschiebbaren Bügel (43) drehbar
     gelagert ist, der auf einem Meßstab 16 befestigt ist,
     der unmittelbar mit der Meßeinrichtung (6, 9) für das
     strömende Medium (28) verbunden ist.

16.  Einrichtung nach einem der vorhergehenden Ansprüche,
     dadurch gekennzeichnet, daß der Schlitzträger in der
     Wand eines abgedichteten Gehäuses (33) eingesetzt ist,
     dessen Innenraum mit der Gaszuführung (38) verbunden
     ist wobei das Gehäuse (33) in einem von dem steuernden Medium (28) durchströmten Gehäuse (2) angeordnet
     ist.

17.  Einrichtung nach einem der vorhergehenden Ansprüche,
     dadurch gekennzeichnet, daß in dem Strom des Mediums
     (28) eine Meßkonus mit einer Meßscheibe vorgesehen
     sind, und daß die Öffnung der Schlitze (42, 53) in
     Abhängigkeit von der Stellung der Meßscheibe erfolgt.

18.  Einrichtung nach einem der vorhergehenden Ansprüche,
     dadurch gekennzeichnet, daß die Dosiereinrichtung in
     der Achse eines von der Ansaugluft des Verbrennungsmotors durchströmten Gehäuses (2) angeordnet ist.

19.  Dosiereinrichtung nach Anspruch 18, dadurch gekennzeichnet, daß das die Dosiereinrichtung enthaltende,
     von der vom Motor angesaugten Luft (28) durchströmte
     Gehäuse (2) vor einer an sich bekannten, in die An-
     saugleitung (17) des Verbrennungsmotors eingeschalte-
     ten Drosselklappe (26) angeordnet ist.

20.  Dosiereinrichtung nach Anspruch 19, dadurch gekennzeichnet, daß die Einrichtung in den Luftstrom
     zwischen Luftfilter (1) und Drosselklappe (26) eingeschaltet ist und daß parallel hierzu ein Vergaser für
     flüssigen Kraftstoff angeordnet ist

*Fig.1*

00 71 1 55

/2

Fig.2

Fig.3

Fig.4